# EUROPEAN PATENT SPECIFICATION

(11) **EP 3 680 955 B1**
(45) Date of publication and mention of the grant of the patent: **16.08.2023**
(21) Application number: 19150774.8
(22) Date of filing: 08.01.2019
(51) Int. Cl.: H01M 10/42, H01M 10/48, H01M 50/574

(54) **BATTERY SYSTEM**
BATTERIESYSTEM
SYSTÈME DE BATTERIE

(43) Date of publication of application: 15.07.2020
(73) Proprietor: Samsung SDI Co., Ltd., Gyeonggi-do 17084 (KR)
(72) Inventor: HOFER, Maximilian, 8230 Hartberg (AT); FRITZ, Jürgen, 8020 Graz (AT)
(74) Representative: Gulde & Partner

(56) References cited:
- EP-A2- 2 075 893
- US-A1- 2017 084 088
- US-A1- 2018 172 770

## Description

### Field of the Invention

The present invention relates to a battery system with an integrated redundant relay control for disconnecting the battery system from an external load. The present invention further relates to a control system providing such redundant relay control for a battery system and to a method for operating a battery system by a control system according to the invention.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while highcapacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be a battery module formed of multiple battery submodules, each comprising battery cells coupled in series and/or parallel so as to provide a high energy density, e.g. for a hybrid vehicle. Such battery modules may be mechanically and electrically integrated, equipped with a thermal management system and set up for communication with each other and one or more electrical consumers to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters, a battery system usually comprises a battery management unit (BMU) and/or a battery system manager (BSM). Such control units may be an integral part of the battery system and disposed within a common housing or may be part of a remote control unit communicating with the battery system via a suitable communication bus. In both cases, the control unit may communicate with the electrical consumers via a suitable communication bus, e.g. a CAN or SPI interface.

The BSM/BMU may further communicate with each of the battery submodules, particularly with a cell supervision circuit (CSC) of each of the battery submodules. The CSC may be further connected to a cell connection and sensing unit (CCU) of one or more of the battery submodules that may interconnect the battery cells of the respective battery submodule.

A battery system may further comprise a protection system to provide a voltage level control of a power interface of the battery system and to enable a fast and reliable safety shutdown of the power interface in the case of non-permissible operating conditions. Such protection system may be adapted to shutdown a power connection between the battery system and an external terminal of the battery system. A typical protection system comprises an electro-mechanical switch that is usually controlled by a microcontroller (MCU) of the battery system.

Typically, the microcontroller for controlling such electro-mechanical switch is also used for controlling other functions of the battery system. Exemplarily, the MCU is part of the BSM/BMU of the battery system. This provides a further integration of the battery system and hence advantageously reduces its material costs and the construction space requirements.

However, with increasing capacity of the battery systems utilized in at least partially electrically powered vehicles, the high voltage (HV) batteries shall be increasingly used for supplying security relevant functions of the vehicle, such as e.g. steer-by-wire, autonomous driving, or crash protection. The availability of the HV batteries thus becomes more important in order to provide security relevant functions with sufficient reliability. Exemplarily, some manufacturers already rank the availability of the HV batteries according to ASIL B standard.

In other words, a failure rate of the battery system must be sufficiently low. In the case of ASIL B for example a fit rate of 100 FIT ("*failure in time", i.e. failures per 10⁹ h*) or below must be achieved. These specifications have been hard to meet due to the microcontrollers usually utilized in the control units of battery systems, e.g. as MCU or System Basis Chip (SBS).

Exemplarily, the MCU used in a common BSM/BMU may have a fit rate of up to 2000 FIT and may thus not be approved as to fulfil the requirements of ASIL B.

US 2018/172770 A1 discloses a BMS for an electric vehicle and is concerned with providing a safety protection system for a battery system that reduces the risk of false operation of the safety protection system by distinguishing an abnormal detection of an operational signal from an actual malfunctioning of the battery system that requires shutting off a power switch. US 2017/084088 A1 discloses a battery system with a CAN bus for communication.

It is thus an object of the present invention to overcome or reduce the drawbacks of the prior art and to provide a battery system with improved availability, i.e. decreased FIT rate, which reliably provides security relevant functions, such as e.g. emergency shut down in due time.

### Description of the invention

One or more of the drawbacks of the prior art could be avoided or at least reduced by means of the present invention. According to a first aspect of the present invention, a control system for a battery system is provided, wherein the control system comprises a power switch configured for disconnecting the battery system from an external load in response to a control signal. The power switch is either set conductive or non-conductive via the control signal. Also preferred, the conductivity of the power switch is set freely based on the control signal. Particularly preferred, the power switch is a relay or a power transistor, e.g., MOSFET.

The control system further comprises a battery system manager, BSM, which comprises at least a first microcontroller, MCU. The BSM may further comprise other components, e.g. other microcontrollers, input nodes, output nodes, memory, etc. The first MCU is configured for performing at least one control function with respect to the battery system. The control functions preferably relates to performing, receiving and/or processing measurements of cell voltages, currents, resistances or capacities. Further preferred, the control functions comprise the active or passive balancing of cell voltages or cell currents of a plurality of battery cells. Preferably, the control functions further relate to data communication with the CSCs of battery cells or battery submodules of the battery system and/or with electrical consumers.

The first MCU is further configured for controlling the power switch via a first control signal in a normal operation mode of the first MCU. In other words, the first control signal is suitable for controlling the power switch, e.g. a relay, of the control system or the battery system in which the control system is utilized. Preferably, the first control signal is suitable for setting the power switch either conductive or non-conductive, e.g. by taking one of two values. The first microcontroller is thus configured to control the protection system of the battery system, which may be an overcurrent protection system of the battery system.

The control system of the present invention further comprises a battery disconnect unit or battery disconnect unit electronics, BDUe, which comprises a second microcontroller, MCU. The BDUe may further comprise other components, e.g. other microcontrollers, input nodes, output nodes, memory, etc. The BDUe is further configured for detecting an output current of the battery system. Therefore, the BDUe may comprise a current sensor or may be connected to a current sensor via a suitable input node. The BDUe is preferably further configured for processing measured values, e.g. by calculating an output current based on a voltage drop that was measured over a shunt resistance, and for transmitting a current signal that is indicative of the detected or calculated output current to the BSM. The BDUe may further be configured for detecting an output voltage of the battery system. The second MCU is further configured to detect a fault mode of the first MCU.

Above that the BDUe is configured for controlling the power switch via a second control signal. Therein, the second control signal is also suitable for controlling the power switch, e.g. a relay, of the control system or a battery system in which the control system is utilized. Therein, the second control signal is also suitable for setting the power switch either conductive or non-conductive, e.g. by taking one of two values. The second microcontroller is thus configured to control the protection system of the battery system, in the fault mode of the first MCU, which may be the overcurrent protection system of the battery system.

The control system of the present invention further comprises a multiplexer that is configured for receiving the first control signal from the first MCU, e.g. via a suitable first input node, and, for receiving the second control signal from the second MCU, e.g. via a suitable second input node. The multiplexer is further configured for outputting the first control signal to the power switch in the normal operation mode of the first MCU and for outputting the second control signal to the power switch in the fault mode of the first MCU. Thus, the control system of the present invention provides a redundant control for a power switch for disconnecting a battery system from an external load. In other words, the control system of the present invention advantageously provides an alternative MCU for controlling a power switch for emergency shut-down of a battery system. Therein, the availability of the battery system is improved by decreasing the FIT rate of the battery system, particularly of the protection system of the battery system, by providing an alternative signal path between the second MCU and the power switch. The control unit of the invention thus allows ASIL B classification of a battery system. Further, as common battery systems usually comprise a BSM and a BDUe, the control system of the present invention utilizes components that are already present and thus provides a cost-effective realization for a redundant control of the protection system as a limp home function.

According to a preferred embodiment of the present invention, the second MCU is further configured for outputting the second control signal in response to detecting a fault state of the first MCU. Particularly preferred, the second MCU is configured to output the second control signal, if a fault state of the first MCU is detected, and to not output the second control signal, if a fault state of the first MCU is not detected. Advantageously, the second MCU does not have to provide the second control signal at all time and hence this solution provides reduced energy consumption.

Also preferred, the second MCU is further configured for performing bidirectional communication with the first MCU, e.g. by receiving a reception confirmation regarding the current signal. Further preferred, the second MCU is configured for detecting a fault state of the first MCU in response to a failed communication. Therein, a failed communication may be detected, if in a bidirectional communication no messages are received by the first MCU. However, alternative approaches for detecting a failed communication, e.g. by measuring voltage levels on a CAN bus or receiving an error message of the first MCU, may be used.

In a further preferred embodiment of the present invention, the second MCU is connected to the first MCU via a CAN bus and to the multiplexer via a separate data line, particularly preferred via a wire connection, e.g. a one wire connection. Providing a physically separate data line between the second MCU and the multiplexer allows for increasing the FIT rate of the control system. Particularly, a failure in the first MCU or the communication path between the first and second MCU does not affect the control of the power switch by the second MCU. Hence, the control system realizes fast reaction and switching times with high reliability. Particularly preferred, the control system as a whole has an FIT rate of 100 or less.

Further preferred, the multiplexer is configured for receiving a fault signal indicative of an operation state of the first MCU and for transmitting one of the first control signal and the second control signal to the power switch based on the received fault signal. In other words, the multiplexer cannot solely be an AND gate but requires a further input node (selector pin) for the fault signal as a selector signal, i.e. the multiplexer has at least three input nodes.

The fault signal is preferably generated by and received from the first MCU. Alternatively, the fault signal is generated and received by an additional circuit or component that is configured for monitoring the microcontroller, such as e.g. a system basis chip as it is commonly known to the person skilled in the art. Therein the additional circuit or component may be part of the BSM. The fault signal may be further transmitted to the second MCU for allowing the second MCU to detect a fault state of the first MCU and to start controlling the power switch via the second control signal. Thus, the fault signal may be utilized for two purposes simultaneously.

Particularly preferred, the control system of the invention further comprises a system basis chip, SBC, which is configured for detecting a fault state of the first MCU and for outputting the fault signal to the multiplexer. Therein, the SBC may output the fault signal only in response to detecting the fault state of the first MCU and output not fault signal otherwise.

Further preferred, the multiplexer is configured for transmitting the first control signal to the power switch if the received fault signal is indicative of an operative state of the first MCU. In other words, during normal operation of the first MCU without failure, the first MCU controls the power switch of the battery system. Thus, all functionalities and safety mechanisms, e.g. with respect to a plurality of different sensor values received and processed by the first MCU, such as e.g. on temperature, current, voltage, or gas composition, can be utilized for controlling the emergency shut down of the battery system.

Further preferred, the multiplexer is configured for transmitting the second control signal to the power switch if the fault signal is indicative of a malfunction of the first MCU. In other words, if a failure occurs in the first MCU, the control of the power switch via the first MCU is stopped and the power switch becomes controlled by the second MCU. Advantageously, even in a fault situation of the first MCU, a reliable emergency shut down of the battery system can be guaranteed. The control of the emergency shut down via the second MCU may be based on less sensor signals, e.g. only on the output current of the battery system.

These preferred embodiments represent a basic solution for supplementing the isolated power switch control via the first MCU with controlling the power switch via the second MCU. Therein, the second MCU may be also configured to consider further input signals, that are e.g. indicative of an operation state of the vehicle or the battery system, indicative of environmental conditions, or indicative of an operation state of the second MCU. Further, the second MCU may apply time constants before setting the conductivity of the power switch.

According to a particularly preferred embodiment of the invention, the second MCU is configured for setting the power switch non-conductive after a first time period after receiving a fault signal indicating a malfunction of the first MCU. In other words, the second MCU shuts off the battery system from any external load after a fixed first time period lapsed since an error of the first MCU has been detected. Therein, the shut off via the power switch preferably occurs irrespective of any other signal inputs to the second MCU. Thus, if the second MCU realizes a fault of the first MCU it starts a first timer after that the power switch is inevitably set non-conductive. This functionality advantageously provides a reliable shut down in case of a first MCU failure and hence allows for a low FIT rate and a high ASIL rating of a control system according to the present invention. Additionally or alternatively, the first time period allows for a limp home functionality of the battery system used in an electric vehicle.

According to another preferred embodiment of the invention, the first MCU is configured for generating the first control signal that causes the power switch to be set non-conductive if the output current of the battery system exceeds a first threshold, and the second MCU is configured for generating the second control signal that causes the power switch to be set non-conductive if the output current of the battery system exceeds a second threshold lower than the first threshold. The second MCU preferably comprises at least one comparator circuit or operational amplifier that receives the output current as a first input and outputs the second control signal. The predetermined threshold may be supplied to such comparator or operational amplifier as second input by an external signal or from an internal memory. Hence, the second MCU advantageously also realizes a sensor-based emergency shutdown of the power switch, i.e. the battery system. Such emergency shutdown is preferably realized additionally to the timer-based shutdown, i.e. preferably only during the first predetermined time period.

According to a further preferred embodiment of the invention, the second MCU is configured for setting the power switch conductive for a second time period after receiving a fault signal indicating a malfunction of the first MCU. In other words, the second MCU generates and transmits a second control signal for setting the power switch conductive to the power switch for a fixed second time period starting with the detection of an error of the first MCU. Preferably, the power switch is set conductive irrespective of any other signal inputs to the second BDU during the second time period. Thus, the sensor-based emergency shut-down of the battery system is postponed for the second time period, wherein a shut-down of the power switch, i.e. the battery system, is prevented.

These feature advantageously allows for a transition phase between a normal operation of the control system and the battery system controlled by the first MCU and an availability mode, wherein the control system and the battery system are controlled by the second MCU after a fault of the first MCU occurred and before a sensor-based emergency shutdown is realized by the second MCU. Particularly preferred the second time period is less than the FTTI of the plurality of battery cells and also preferred less than the first time period. This allows that the battery system reaches a safe state by applying the sensor-based emergency shutdown by the second MCU within the *fault tolerant time interval.*

Another aspect of the present invention relates to a battery system that comprises a plurality of battery cells, which are electrically connected in series between a first node and a second node, a power switch that is interconnected between the first node or the second node and at least one external load, and a control system according to the invention as described above. Therein, an output node of the multiplexer of the control system is connected to the power switch for controlling the conductivity of the power switch. The battery system of the invention advantageously utilizes the positive effects provided by the control system of the invention.

According to a preferred embodiment, the battery system of the invention further comprises at least one cell supervision circuit, CSC, that is configured for detecting the voltage and/or the temperature of at least one of the plurality of battery cells. Particularly preferred, the battery system comprises a plurality of modules or submodules, each comprising a plurality of battery cells connected in series and/or in parallel, and a CSC for each of the modules or submodules. Then the CSC is configured for detecting at least one cell voltage and/or cell temperature of the respective battery module or battery submodule. Further preferred, the BSM is configured for communicating with the at least one CSC for receiving signals representative of the detected cell voltages and/or cell temperatures measured by the at least one CSC. Preferably, the BSM communicates with a plurality of CSC, e.g. via a daisy chain.

Another aspect of the present invention relates to a vehicle, particularly an electric vehicle or hybrid vehicle, which comprises at least one first electrical consumer electrically connected as an external load to a battery system according to the present invention as described above. Hence, if a failure of the battery system's first MCU occurs, an emergency shutdown of the at least one first electrical consumer is controlled by the second MCU. Thus, the reliability of the battery system, particularly its emergency shutdown, is improved.

Preferably, the vehicle further comprises at least one second electrical consumer that is electrically connected to the battery system and that is not security relevant for the vehicle. The vehicle of this embodiment further comprises a control unit that is configured for shutting off the at least one second electrical consumer in response to receiving a fault signal indicative of a malfunction of the first MCU. Preferably, the control unit may receive the fault signal from a system basis chip of the battery system's control system as described above.

This embodiment advantageously allows for shutting down the second electrical consumers of the vehicle immediately with the recognition of a fault of the battery system's first MCU. Particularly preferred, high load consumers, such as e.g. the electric motor of the vehicle, are shut down as the second electrical consumer. Hence, a current drawn from the battery system is quickly reduced for safety reasons. Further, as the first electrical consumers are security relevant for the vehicle, controlling them by the second MCU as described above guarantees prolonged availability of the security relevant functions of these first consumers.

Particularly preferred, the first time period, the second time period, and the sensor-based emergency shutdown as described above are applied in controlling the first electrical consumers after the first MCU fault recognition. Thus, the security relevant functions of the first electrical consumers are guaranteed for the predetermined first time period, whereas a sensor based emergency shut-down is also provided during the first time period, except for the second time period in order to allow for a transition into the safe state.

Another aspect of the present invention relates to a method for operating a battery system, wherein the battery system comprises at least a plurality of battery cells that are electrically connected in series between a first node and a second node, a power switch that is interconnected between the first node or the second node and at least one external load, and a control system according to the invention that is configured for controlling the power switch.

In a normal operation mode of a first MCU of the control system, the power switch is controlled by the first MCU via a first control signal transmitted via the multiplexer. If a fault mode of the first MCU is detected by a second MCU of the control system, e.g. by detecting a failed communication between the first and second MCU or by receiving a signal indicative of a fault of the first MCU, the power switch is controlled by the second MCU via a second control signal transmitted via the multiplexer. Preferably, the multiplexer receives the first control signal, the second control signal and a signal indicative of a fault of the first MCU and transmits one of the first and second control signal to the power switch based on the received fault signal. Therein, the signal indicative of a fault of the first MCU might be generated by a system basis chip supervising the first MCU and may be also transmitted to the second MCU.

Preferably, the multiplexer transmits the first control signal to the power switch if the received fault signal is indicative of an operative mode of the first MCU. Further preferred, the multiplexer transmits the second control signal to the power switch if the fault signal is indicative of a malfunction of the first MCU. Hence, during a normal mode without a failure occurring in the first MCU, the first MCU controls the power switch of the battery system, while, if a failure occurs in the first MCU, the control of the power switch via the first MCU is stopped and the power switch becomes controlled solely by the second MCU.

Thus, in the normal mode all functionalities and safety mechanisms, e.g. with respect to a plurality of different sensor values (temperature, current, voltage, gas composition), may be utilized for controlling the emergency shut down of the battery system. However, even in a fault situation of the first MCU, a reliable emergency shut down of the battery system is guaranteed, even if it might be based on less sensor signals, e.g. only a current sensor value.

According to a preferred embodiment, the method of the present invention further comprises at least one of the following steps performed by the second MCU control system.

The second MCU preferably sets the power switch to be non-conductive after a first time period after detecting a fault state of the first MCU. Hence, a reliable emergency shut-down is provided if a fault occurs in the first MCU. The second MCU preferably sets the power switch conductive for a predetermined second time period after detecting a fault state of the first MCU. Hence, a transition period can be provided for transferring a shut-down control form the first MCU to the second MCU. Further, the second MCU preferably generates, during the first time period, a second control signal causing the power switch to be set non-conductive if an output current of the battery system exceeds a predetermined threshold. Hence, a sensor-based emergency shut-down is advantageously provided even after a fault of the first MCU occurred and while the control of the power switch is performed solely by the second MCU.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates an electronic schematic view of a battery system according to an example;
- Fig. 2: illustrates an electronic schematic view of a control system according to an embodiment;
- Fig. 3: illustrates two operation modes of the control system of Figure 2;
- Fig. 4: illustrates an electronic schematic view of a battery system according to an embodiment; and
- Fig. 5: illustrates a schedule of a current and the performed steps of a battery system according to an embodiment for switching the modes.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to the illustrated embodiments. Accordingly, processes, elements, and techniques that are not considered necessary to those having ordinary skill in the art for a complete understanding of the aspects and features of the present invention may not be described. Further, in the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5%.

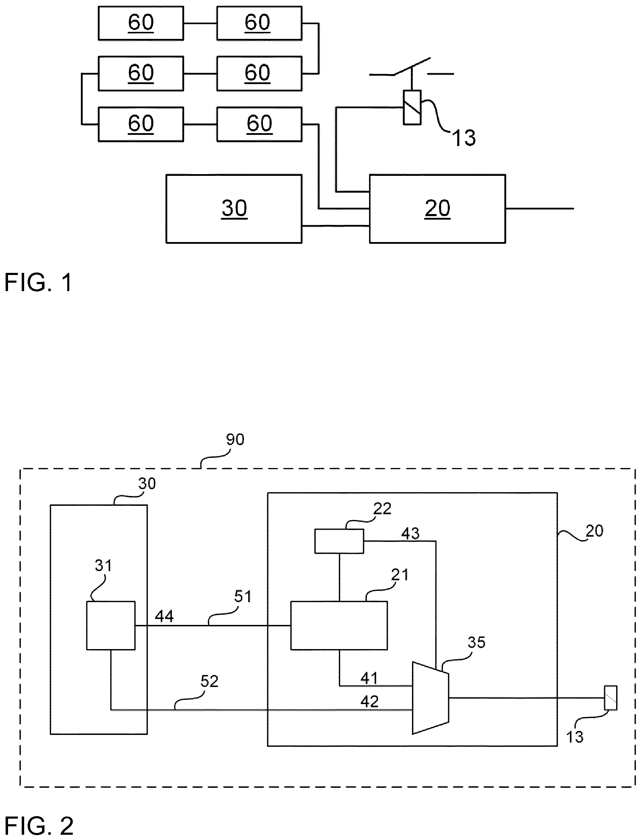

Figure 1 illustrates an electronic schematic view of a battery system according to an example. The battery system may part of an electric vehicle (not shown) and configured for supplying a motor of the electric vehicle. The battery system comprises a plurality of battery modules (not shown), each comprising a plurality of battery cells connected in series. One of a plurality of cell supervision circuits, CSCs, 60 is assigned to each of the battery modules and configured for detecting the voltages and temperatures of each battery cell of the respective battery module. The CSCs 60 are connected to each other and to a battery system manager, BSM, 20 via a daisy chain configuration, i.e. they are serially connected via a single data line. The BSM 20 is configured for receiving the voltage and temperature readings of the CSCs 60, for analyzing these readings and for controlling the battery modules based on these readings.

Above that, the BSM 20 is configured to communicate with the vehicle via a CAN bus that extends to the right of the BSM 20 in Figure 1, to receive commands from the vehicle via the CAN bus and for controlling the battery modules based on these load requests. The BSM 20 is further configured to communicate with a battery disconnect unit electronics, BDUe, 30 that is configured for detecting an output voltage of the battery system and for transmitting the system current reading to the BSM 20. Based on this system current reading the BSM 20 sets the conductivity of a power switch 13 that is connected between the battery system and the loads of the electric vehicle that are supplied from the battery system. Therein, the relay 13 may be internal or external to the battery system. In the battery system of Figure 1, if the BSM 20 is in a fault state the control of the power switch 13 is likely to fail.

Figure 2 illustrates a schematic view of a control system 90 according to an embodiment of the present invention. The control system 90 comprises a power switch 13 that corresponds to the power switch 13 of Figure 1 and is interconnected between a battery system and at least one external load supplied by the battery system. The power switch 13 receives a control signal from a multiplexer 35, wherein the conductivity of the power switch 13 is set based on the control signal. The multiplexer 35 is part of a BSM 20 that further comprises a first microcontroller, MCU, 21. The first MCU 21 outputs a first control signal 41 to the multiplexer 35, wherein the first control signal 41 is configured to set the conductivity of the power switch 13. The BSM 20 is further configured to perform at least one control function with respect to a battery system and to communicate with a vehicle as described with respect to Figure 1. The control system 90 further comprises a BDUe 30 that comprises a second MCU 31 and that is configured for detecting an output current of a battery system. The BDUe 30 is further configured for transmitting a current signal 44 indicative of the detected output current to the BSM 20 via a CAN bus 51. The BDUe 30 is further configured for transmitting a second control signal 42 to the multiplexer 35 via a data line 52, wherein the second control signal 42 is also configured to set the conductivity of the power switch 13 and wherein the data line 52 is physically separate from the CAN bus 51.

The multiplexer 35 further receives a fault signal 43 of a system basis chip 22 that is supervising the first MCU 21. Therein, the fault signal 43 is indicative of an operation state of the first MCU 21. Exemplarily, the fault signal 43 is based on self-testing of the first MCU 21 and/or is output if internal error codes of the first MCU 21 occur more frequently than sporadic. The fault signal 43 is either indicative of an operability of the first MCU 21 or of a malfunction of the first MCU 21, and thus may take one of two possible values, e.g. "0" or "1". The multiplexer 35 outputs either the first control signal 41 or the second control signal 42 to the relay 13 based on the received fault signal 43. In other words, in dependency of the value of the fault signal 43, i.e. whether it is indicative of operability or a malfunction of the first MCU 21, the multiplexer 35 selects one of the first and second control signal 41, 42 and outputs the selected control signal to relay 13. Thus, control system 90 allows for continued control of relay 13, even if first MCU 21 has a malfunction and cannot control the relay 13.

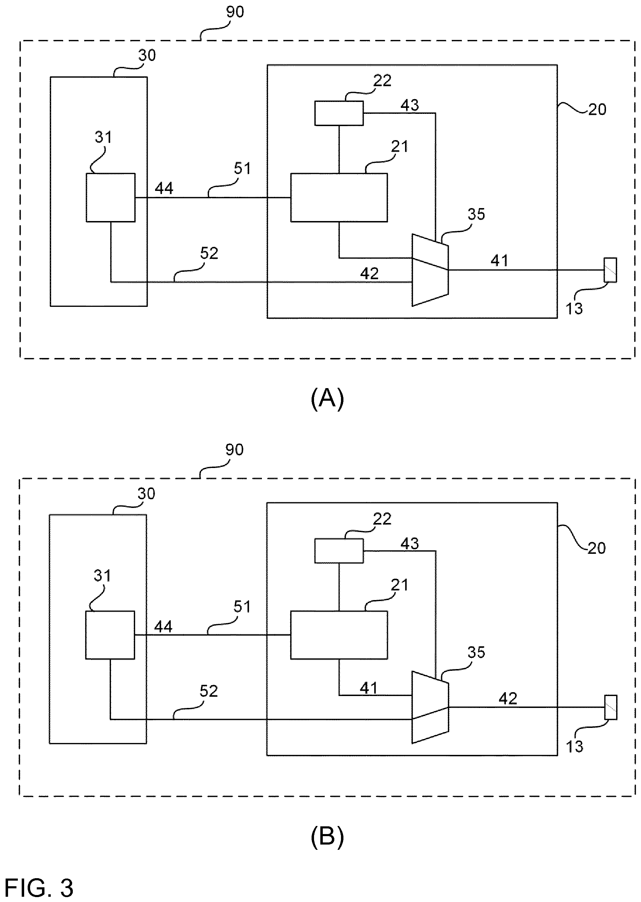

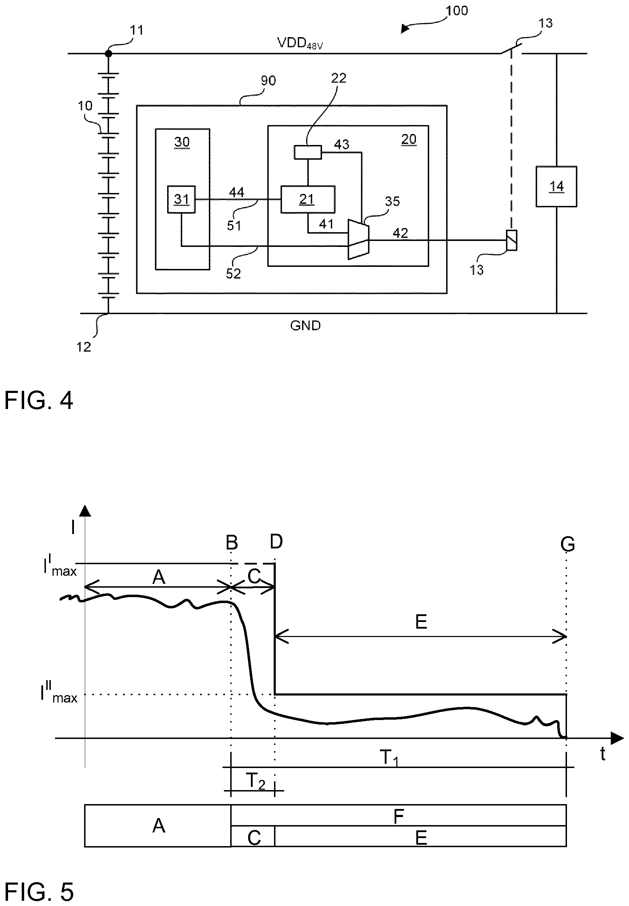

As shown in Figure 3, the control system 90 of Figure 2 has two operation modes. Therein, in a first operation mode, i.e. normal mode, as shown in Figure 3a, the fault signal 43 received by the multiplexer 35 is indicative of an operative state of the first MCU 21, e.g. by value "1". In response thereto, the multiplexer 35 transmits the first control signal 41 to the power switch 13 for controlling the conductivity thereof. In a second operation mode, i.e. fault mode, as shown in Figure 3b, the fault signal 43 received by the multiplexer 35 is indicative of a fault state of the first MCU 21, e.g. by value "0". In response thereto, the multiplexer 35 transmits the second control signal 42 to the power switch 13 for controlling the conductivity thereof. Figure 4 illustrates a battery system 100 according to an embodiment of the invention. Therein, a plurality of battery cells 10 is connected in series between a first node 11 and a second node 12. Additionally, battery cells 10 may be connected in parallel between the first node 11 and the second node 12, forming an *XsYp* configuration between these nodes 11, 12. Further, battery submodules (not shown) may be connected between these nodes 11, 12.

Each of the twelve battery cells 10 provides a voltage of approximately 4 V such that a voltage VDD of approximately 48 V applies between the first node 11 and the second node 12. An external load 14 is supplied with this voltage of the battery cells 10. A relay 13 is interconnected as power switch between the first node 11 and the external load 14 for controlling the power supply to the external load 14. Therein, the conductivity state of the relay 13 is controlled by a control system 90 via an output node (not shown) thereof. The control system 90 corresponds to that described with respect to Figure 2 and is in the fault state as described with respect to Figure 3b. In this operation state, the second MCU 31 of the BDUe 30 sets the relay 13 conductive via the second control signal 42 if an output current of the battery system 100 is below a predetermined threshold and sets relay 13 non-conductive if the BDUe 30 detects an overcurrent outputted by the battery system 100. Further, the BDUe 30 applies time constants in controlling the relay 13 as described below.

Figure 5 schematically illustrates a timeline of a current of a battery system 100 according to an embodiment of the invention. During a normal operation mode A of the battery system 100 and control system 90, the first MCU 21 operates without fault and a maximum current I^{l}ₘₐₓ is allowed to be provided by the battery system 100. During normal operation mode, the fault signal 43 is indicative of the operability of the first MCU 21 and takes the binary value "1". The fault signal 43 is supplied to the multiplexer 35 as control signal input and sets the data signal input of the multiplexer 35 to a first data signal input to which the first control signal 41 is supplied from the first MCU 21. Hence, during normal operation mode A, the first control signal 41 is output to the relay 13 via multiplexer 35 and thus the relay 13 is controlled by first MCU 21. The first MCU 21 sets the relay 13 non-conductive via the first control signal 41 if the current signal 44 received from the BDUe indicates a current that exceeds I^{l}ₘₐₓ.

At time point B shown in Figure 5, a failure occurs in the first MCU 21 or in another part of the electronics and is immediately realized by the first MCU 21 itself or by a system basis chip 22 connected to the first MCU 21. Hence, from time point B the fault signal 43 is indicative of a malfunction of the first MCU 21 by taking the value "0". Thus, the control signal input of the multiplexer 35 is set to a second data signal input to which second control signal 42 is supplied from the second MCU 31.

As illustrated in Figure 5 during the second time period T₂, i.e. during initial mode C, the current drops below a second current threshold I^{ll}ₘₐₓ due to cutting not security relevant second electrical consumers from the battery system 100. During initial mode C, no threshold based control of relay 13 occurs in order to allow reducing the current consumption below I^{ll}ₘₐₓ while preventing a premature shut down of the battery system 100 via the relay 13. In other words, the BDUe 30 is configured to output a second control signal 42 that sets the relay 13 conductive until the second time period T₂, which started at time point B, lapses.

During the first time period T₁ and after the lapse of the second time period T₂, i.e. between the points D and G or during low performance mode E as illustrated in Figure 5, a sensor-based control of the relay 13 is performed by the BDUe 30 in order to realize an overcurrent protection, whereas the overcurrent is lowered from Iₘₐₓ to I^{ll}ₘₐₓ. In other words, during the low performance mode E, the BDUe 30 shuts down the battery system 100 via relay 13 if the output current of the battery system 100 is above the threshold current I^{ll}ₘₐₓ. At the end of the first time period T₁, i.e. at point G illustrated in Figure 5, the relay 13 is finally set non-conductive by the second MCU 31 via the second control signal 42. Hence, at point G the availability mode of the battery system 100 that started with the fault at time point B ends. The first time period T1 may be set to allow for a limp home function of the electric vehicle.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

### Reference signs

- 10: battery cell
- 11: first node of battery system
- 12: second node of battery system
- 13: power switch (relay)
- 14: external load
- 20: battery system manager, BSM
- 21: first microcontroller, MCU
- 22: system basis chip, SBC
- 30: battery disconnect unit electronics, BDUe
- 31: second microcontroller, MCU
- 35: multiplexer, MUX
- 41: first control signal
- 42: second control signal
- 43: fault signal
- 44: current signal
- 51: CAN bus
- 52: data line
- 60: cell supervision circuit, CSC
- 90: control system
- 100: battery system

## Claims

1. Control system (90) for a battery system (100), the control system (90) comprising:
a power switch (13) configured for disconnecting the battery system (100) from an external load (14) in response to a control signal (41, 42);
a battery system manager, BSM, (20) comprising a first microcontroller, MCU, (21) configured for performing at least one control function with respect to the battery system (100) and for controlling the power switch (13) via a first control signal (41) suitable for controlling the power switch (13) in a normal operation mode of the first MCU (21);
a battery disconnect unit, BDUe, (30) comprising a second microcontroller, MCU, (31) and configured for detecting an output current of the battery system (100), for transmitting a current signal (44) indicative of the detected output current to the BSM (20), wherein the second MCU (31) is further configured for detecting a fault state of the first MCU (21) and, in the fault mode of the first MCU (21), for controlling the power switch (13) via a second control signal (42) suitable for controlling the power switch (13); and
a multiplexer (35) configured for receiving the first control signal (41) from the first MCU (21), for receiving the second control signal (42) from the second MCU (31) and for outputting , in the normal operation mode of the first MCU (21), the first control signal (41) to the power switch (13) and, in the fault mode of the first MCU (21), the second control signal (42) to the power switch (13),
wherein the second MCU (31) is alternative to the first MCU (21) for controlling the power switch (13).

2. Control system (90) according to claim 1, wherein the second MCU (31) is further configured for outputting the second control signal (42) in response to detecting a fault state of the first MCU (21).

3. Control system (90) according to claim 1 or 2, wherein the second MCU (31) is further configured for performing bidirectional communication with the first MCU (21) and for detecting a fault state of the first MCU (21) in response to a failed communication.

4. Control signal (90) according to any one of the preceding claims, wherein the second MCU (31) is connected to the first MCU (21) via a CAN bus (51) and to the multiplexer (35) via a separate data line (52).

5. Control system (90) according to any one of the preceding claims, wherein the multiplexer (35) is further configured for receiving a fault signal (43) indicative of an operation state of the first MCU (21) and for transmitting one of the first control signal (41) and the second control signal (42) to the power switch (13) based on the received fault signal (43).

6. Control system (90) according to claim 5, wherein the multiplexer (35) is further configured for:
transmitting the first control signal (41) to the power switch (13) if the fault signal (43) is indicative of an operative state of the first MCU (21), and
transmitting the second control signal (42) to the power switch (13) if the fault signal (43) is indicative of a malfunction of the first MCU (21).

7. Control system (90) according to any one of the preceding claims, wherein the BSM (20) further comprises a system basis chip, SBC, (22) configured for detecting a fault state of the first MCU (21) and for outputting the fault signal (43) to the multiplexer (35) in response to detecting the fault state of the first MCU (21).

8. Control system (90) according to claim 2, wherein the second MCU (31) is further configured for setting the power switch (13) non-conductive after a first time period (T₁) after detecting a fault state of the first MCU (21).

9. Control system (90) according to claims 2 or 8, wherein:
the first MCU (21) is further configured for generating the first control signal (41) setting the power switch (13) non-conductive if the detected output current exceeds a first threshold; and
the second MCU (31) is further configured for generating the second control signal (42) setting the power switch (13) non-conductive if the detected output current exceeds a second threshold lower than the first threshold.

10. Control system (90) according to claim 8, or 9, wherein the second MCU (31) is further configured for setting the power switch (13) conductive for a second time period (T₂) that is less than the first time period (T₁) after detecting a fault state of the first MCU (21).

11. Battery system (100), comprising
a plurality of battery cells (10) electrically connected in series between a first node (11) and a second node (12); and
a control system (90) according to any one of the claims 1 to 10,
wherein the power switch (13) is interconnected between the first node (11) or the second node (12) and at least one external load (14).

12. Battery system (100) according to claim 11, further comprising:
at least one cell supervision circuit, CSC, (60) configured for detecting the voltage and/or the temperature of at least one of the plurality of battery cells (10),
wherein the BSM (20) is further configured for communicating with the at least one CSC (60) for receiving the detected cell voltage and/or cell temperature.

13. Vehicle comprising at least one first electrical consumer electrically connected as external load (14) to a battery system (100) according to any one of the claims 11 to 12, wherein the BSM (20) is further configured for communicating with the vehicle.

14. Vehicle according to claim 13, further comprising at least one second electrical consumer electrically connected to the battery system (100) and a vehicle control unit configured for shutting off the at least one second electrical consumer in response to receiving a fault signal indicative of a malfunction of the first MCU (21), wherein the at least one second electrical consumer is not security relevant for the vehicle.

15. Method for operating a battery system (100) with a plurality of battery cells (10) electrically connected in series between a first node (11) and a second node (12), a power switch (13) interconnected between the first node (11) or the second node (12) and at least one external load (14), and a control system (90) configured for controlling the power switch (13), the method comprising the steps:
Controlling, in a normal operation mode of a first MCU (21) of the control system (90), the power switch (13) by the first MCU (21) via a first control signal (41) suitable for controlling the power switch (13), the first control (41) signal being transmitted from the first MCU (21) to a multiplexer (35) and, in the normal operation mode of the first MCU (21), outputted from the multiplexer (35) to the power switch (13);
Detecting a fault mode of the first MCU (21) by a second MCU (31) of the control system (90);
Controlling, in the fault mode of the first MCU (21), the power switch (13) by the second MCU (31) via a second control signal (42) suitable for controlling the power switch (13), the second control signal (42) being transmitted from the second MCU (31) to the multiplexer (35) and, in the fault mode of the first MCU (21), outputted from the multiplexer (35) to the power switch (13),
wherein the second MCU (31) is alternative to the first MCU (21) for controlling the power switch (13).

## Patentansprüche

1. Steuerungssystem (90) für ein Batteriesystem (100), wobei das Steuerungssystem (90) umfasst:
einen Leistungsschalter (13), der so konfiguriert ist, dass er das Batteriesystem (100) in Reaktion auf ein Steuersignal (41, 42) von einer externen Last (14) trennt;
einen Batteriesystemmanager, BSM, (20), der einen ersten Mikrocontroller, MCU, (21) umfasst, der konfiguriert ist, um mindestens eine Steuerfunktion in Bezug auf das Batteriesystem (100) auszuführen und um den Leistungsschalter (13) über ein erstes Steuersignal (41) zu steuern, das geeignet ist, den Leistungsschalter (13) in einem normalen Betriebsmodus des ersten MCU (21) zu steuern;
eine Batterietrenneinheit, BDUe, (30), die einen zweiten Mikrocontroller, MCU, (31) umfasst und konfiguriert ist, um einen Ausgangsstrom des Batteriesystems (100) zu erfassen, um ein Stromsignal (44), das den erfassten Ausgangsstrom anzeigt, an das BSM (20) zu übertragen, wobei der zweite MCU (31) ferner konfiguriert ist, um einen Fehlerzustand der ersten MCU (21) zu erfassen und im Fehlermodus des ersten MCU (21) den Leistungsschalter (13) über ein zweites Steuersignal (42) zu steuern, das zur Steuerung des Leistungsschalters (13) geeignet ist; und
einen Multiplexer (35), der konfiguriert ist, um das erste Steuersignal (41) vom ersten MCU (21) zu empfangen, um das zweite Steuersignal (42) vom zweiten MCU (31) zu empfangen und um in der normalen Betriebsart des ersten MCU (21) das erste Steuersignal (41) an den Leistungsschalter (13) und in der Fehlerart des ersten MCU (21) das zweite Steuersignal (42) an den Leistungsschalter (13) auszugeben,
wobei der zweite MCU (31) alternativ zum ersten MCU (21) zur Steuerung des Leistungsschalters (13) dient.

2. Steuerungssystem (90) nach Anspruch 1, wobei der zweite MCU (31) ferner konfiguriert ist, um das zweite Steuersignal (42) als Reaktion auf die Erfassung eines Fehlerzustands des ersten MCU (21) auszugeben.

3. Steuerungssystem (90) nach Anspruch 1 oder 2, wobei der zweite MCU (31) ferner konfiguriert ist, um eine bidirektionale Kommunikation mit dem ersten MCU (21) durchzuführen und um einen Fehlerzustand des ersten MCU (21) als Reaktion auf eine fehlgeschlagene Kommunikation zu erkennen.

4. Steuersignal (90) nach einem der vorhergehenden Ansprüche, wobei der zweite MCU (31) mit dem ersten MCU (21) über einen CAN-Bus (51) und mit dem Multiplexer (35) über eine separate Datenleitung (52) verbunden ist.

5. Steuerungssystem (90) nach einem der vorhergehenden Ansprüche, wobei der Multiplexer (35) ferner konfiguriert ist, um ein Fehlersignal (43) zu empfangen, das einen Betriebszustand des ersten MCU (21) anzeigt, und um eines von dem ersten Steuersignal (41) und dem zweiten Steuersignal (42) auf der Grundlage des empfangenen Fehlersignals (43) an den Leistungsschalter (13) zu übertragen.

6. Steuerungssystem (90) nach Anspruch 5, wobei der Multiplexer (35) ferner konfiguriert ist zum:
Übertragen des ersten Steuersignals (41) an den Leistungsschalter (13), wenn das Fehlersignal (43) einen Betriebszustand des ersten MCU (21) anzeigt, und
Übertragen des zweiten Steuersignals (42) an den Leistungsschalter (13), wenn das Fehlersignal (43) auf eine Fehlfunktion des ersten MCU (21) hinweist.

7. Steuerungssystem (90) nach einem der vorhergehenden Ansprüche, wobei das BSM (20) ferner einen Systembasischip, SBC, (22) umfasst, der zum Erfassen eines Fehlerzustands des ersten MCU (21) und zum Ausgeben des Fehlersignals (43) an den Multiplexer (35) in Reaktion auf das Erfassen des Fehlerzustands des ersten MCU (21) konfiguriert ist .

8. Steuerungssystem (90) nach Anspruch 2, wobei der zweite MCU (31) ferner konfiguriert ist, um den Leistungsschalter (13) nach einer ersten Zeitspanne (T₁) nach dem Erkennen eines Fehlerzustands des ersten MCU (21) nicht leitend zu machen.

9. Steuerungssystem (90) nach den Ansprüchen 2 oder 8, wobei:
der erste MCU (21) ferner zum Erzeugen des ersten Steuersignals (41) konfiguriert ist, das den Leistungsschalter (13) nicht leitend macht, wenn der erfasste Ausgangsstrom einen ersten Schwellenwert überschreitet; und
der zweite MCU (31) ferner zum Erzeugen des zweiten Steuersignals (42) konfiguriert ist, das den Leistungsschalter (13) nicht leitend macht, wenn der erfasste Ausgangsstrom einen zweiten Schwellenwert überschreitet, der niedriger als der erste Schwellenwert ist.

10. Steuerungssystem (90) nach Anspruch 8 oder 9, wobei der zweite MCU (31) ferner konfiguriert ist, um den Leistungsschalter (13) nach dem Erfassen eines Fehlerzustands des ersten MCU (21) für eine zweite Zeitspanne (T₂), die kleiner als die erste Zeitspanne (T₁) ist, leitend zu machen.

11. Batteriesystem (100), bestehend aus
eine Vielzahl von Batteriezellen (10), die elektrisch in Reihe zwischen einem ersten Knoten (11) und einem zweiten Knoten (12) geschaltet sind; und
ein Steuerungssystem (90) nach einem der Ansprüche 1 bis 10,
wobei der Leistungsschalter (13) zwischen dem ersten Knoten (11) oder dem zweiten Knoten (12) und mindestens einer externen Last (14) geschaltet ist.

12. Batteriesystem (100) nach Anspruch 11, das außerdem Folgendes umfasst:
mindestens eine Zellenüberwachungsschaltung, CSC, (60), konfiguriert zum Erfassen der Spannung und/oder der Temperatur von mindestens einer der Vielzahl von Batteriezellen (10),
wobei das BSM (20) ferner zum Kommunizieren mit dem mindestens einen CSC (60) konfiguriert ist, um die erfasste Zellspannung und/oder Zelltemperatur zu empfangen.

13. Fahrzeug mit mindestens einem ersten elektrischen Verbraucher, der als externe Last (14) mit einem Batteriesystem (100) nach einem der Ansprüche 11 bis 12 elektrisch verbunden ist, wobei das BSM (20) ferner zum Kommunizieren mit dem Fahrzeug konfiguriert ist.

14. Fahrzeug nach Anspruch 13, ferner umfassend mindestens einen zweiten elektrischen Verbraucher, der elektrisch mit dem Batteriesystem (100) verbunden ist, und eine Fahrzeugsteuereinheit, die konfiguriert ist, um den mindestens einen zweiten elektrischen Verbraucher in Reaktion auf den Empfang eines Fehlersignals, das eine Fehlfunktion des ersten MCU (21) anzeigt, abzuschalten, wobei der mindestens eine zweite elektrische Verbraucher nicht sicherheitsrelevant für das Fahrzeug ist.

15. Verfahren zum Betreiben eines Batteriesystems (100) mit einer Vielzahl von Batteriezellen (10), die zwischen einem ersten Knoten (11) und einem zweiten Knoten (12) elektrisch in Reihe geschaltet sind, einem Leistungsschalter (13), der zwischen den ersten Knoten (11) oder den zweiten Knoten (12) und mindestens eine externe Last (14) geschaltet ist, und einem Steuersystem (90), das zum Steuern des Leistungsschalters (13) konfiguriert ist, wobei das Verfahren die Schritte umfasst:
Steuern des Leistungsschalters (13) in einem normalen Betriebsmodus eines ersten MCU (21) des Steuersystems (90) durch der erste MCU (21) über ein erstes Steuersignal (41), das zum Steuern des Leistungsschalters (13) geeignet ist, wobei das erste Steuersignal (41) vom ersten MCU (21) an einen Multiplexer (35) übertragen und im normalen Betriebsmodus des ersten MCU (21) von dem Multiplexer (35) an den Leistungsschalter (13) ausgegeben wird;
Erkennen eines Fehlermodus des ersten MCU (21) durch ein zweites MCU (31) des Steuerungssystems (90);
Steuerung des Leistungsschalters (13) im Fehlermodus des ersten MCU (21) durch den zweite MCU (31) über ein zur Steuerung des Leistungsschalters (13) geeignetes zweites Steuersignal (42), wobei das zweite Steuersignal (42) vom zweiten MCU (31) an den Multiplexer (35) übertragen und im Fehlermodus des ersten MCU (21) vom Multiplexer (35) an den Leistungsschalter (13) ausgegeben wird,
wobei der zweite MCU (31) alternativ zum ersten MCU (21) zur Steuerung des Leistungsschalters (13) dient.

## Revendications

1. Système de commande (90) pour un système de batterie (100), le système de commande (90) comprenant :
un commutateur d'alimentation (13) configuré pour déconnecter le système de batterie (100) depuis une charge externe (14) en réponse à un signal de commande (41, 42) ;
un gestionnaire de système de batterie, BSM, (20) comprenant un premier microdispositif de commande, MCU, (21) configuré pour effectuer au moins une fonction de commande par rapport au système de batterie (100) et pour commander le commutateur d'alimentation (13) via un premier signal de commande (41) adapté pour commander le commutateur d'alimentation (13) dans un mode de fonctionnement normal du premier MCU (21) ;
une unité de déconnexion de batterie, BDUe, (30) comprenant un second microdispositif de commande, MCU, (31) et configurée pour détecter un courant de sortie du système de batterie (100), pour transmettre un signal de courant (44) indicatif du courant de sortie détecté au BSM (20), dans lequel le second MCU (31) est en outre configuré pour détecter un état de défaut du premier MCU (21) et, dans le mode défaut du premier MCU (21), pour commander le commutateur d'alimentation (13) via un second signal de commande (42) adapté pour commander le commutateur d'alimentation (13) ; et
un multiplexeur (35) configuré pour recevoir le premier signal de commande (41) provenant du premier MCU (21), pour recevoir le second signal de commande (42) provenant du second MCU (31) et pour délivrer en sortie, dans le mode de fonctionnement normal du premier MCU (21), le premier signal de commande (41) vers le commutateur d'alimentation (13) et, dans le mode défaut du premier MCU (21), le second signal de commande (42) vers le commutateur d'alimentation (13),
dans lequel le second MCU (31) est une alternative au premier MCU (21) pour commander le commutateur d'alimentation (13).

2. Système de commande (90) selon la revendication 1, dans lequel le second MCU (31) est en outre configuré pour délivrer en sortie le second signal de commande (42) en réponse à la détection d'un état de défaut du premier MCU (21).

3. Système de commande (90) selon la revendication 1 ou 2, dans lequel le second MCU (31) est en outre configuré pour effectuer une communication bidirectionnelle avec le premier MCU (21) et pour détecter un état de défaut du premier MCU (21) en réponse à une communication ayant échoué.

4. Signal de commande (90) selon l'une quelconque des revendications précédentes, dans lequel le second MCU (31) est connecté au premier MCU (21) via un bus CAN (51) et au multiplexeur (35) via une ligne de données séparée (52).

5. Système de commande (90) selon l'une quelconque des revendications précédentes, dans lequel le multiplexeur (35) est en outre configuré pour recevoir un signal de défaut (43) indicatif d'un état de fonctionnement du premier MCU (21) et pour transmettre l'un du premier signal de commande (41) et du second signal de commande (42) au commutateur d'alimentation (13) sur la base du signal de défaut reçu (43) .

6. Système de commande (90) selon la revendication 5, dans lequel le multiplexeur (35) est en outre configuré pour :
transmettre le premier signal de commande (41) au commutateur d'alimentation (13) si le signal de défaut (43) est indicatif d'un état de fonctionnement du premier MCU (21), et
transmettre le second signal de commande (42) au commutateur d'alimentation (13) si le signal de défaut (43) est indicatif d'un dysfonctionnement du premier MCU (21).

7. Système de commande (90) selon l'une quelconque des revendications précédentes, dans lequel le BSM (20) comprend en outre une puce de base système, SBC, (22) configurée pour détecter un état de défaut du premier MCU (21) et pour délivrer en sortie le signal de défaut (43) vers le multiplexeur (35) en réponse à la détection de l'état de défaut du premier MCU (21).

8. Système de commande (90) selon la revendication 2, dans lequel le second MCU (31) est en outre configuré pour établir le commutateur d'alimentation (13) non-conducteur après une première période de temps (T₁) après la détection d'un état de défaut du premier MCU (21).

9. Système de commande (90) selon les revendications 2 ou 8, dans lequel :
le premier MCU (21) est en outre configuré pour générer le premier signal de commande (41) établissant le commutateur d'alimentation (13) non-conducteur si le courant de sortie détecté dépasse un premier seuil ; et
le second MCU (31) est en outre configuré pour générer le second signal de commande (42) établissant le commutateur d'alimentation (13) non-conducteur si le courant de sortie détecté dépasse un second seuil inférieur au premier seuil.

10. Système de commande (90) selon la revendication 8 ou 9, dans lequel le second MCU (31) est en outre configuré pour établir le commutateur d'alimentation (13) conducteur pendant une seconde période de temps (T₂) qui est inférieure à la première période de temps (T₁) après détection d'un état de défaut du premier MCU (21).

11. Système de batterie (100), comprenant
une pluralité de cellules de batterie (10) connectées électriquement en série entre un premier noeud (11) et un second noeud (12) ; et
un système de commande (90) selon l'une quelconque des revendications 1 à 10,
dans lequel le commutateur d'alimentation (13) est interconnecté entre le premier noeud (11) ou le second noeud (12) et au moins une charge externe (14).

12. Système de batterie (100) selon la revendication 11, comprenant en outre :
au moins un circuit de supervision de cellule, CSC, (60) configuré pour détecter la tension et/ou la température d'au moins une de la pluralité de cellules de batterie (10),
dans lequel le BSM (20) est en outre configuré pour communiquer avec au moins un CSC (60) pour recevoir la tension de cellule et/ou la température de cellule détectées.

13. Véhicule comprenant au moins un premier consommateur électrique connecté électriquement en tant que charge externe (14) à un système de batterie (100) selon l'une quelconque des revendications 11 à 12, dans lequel le BSM (20) est en outre configuré pour communiquer avec le véhicule.

14. Véhicule selon la revendication 13, comprenant en outre au moins un second consommateur électrique connecté électriquement au système de batterie (100) et une unité de commande de véhicule configurée pour couper l'au moins un second consommateur électrique en réponse à la réception d'un signal de défaut indicatif d'un dysfonctionnement du premier MCU (21), dans lequel l'au moins un second consommateur électrique n'est pas important en termes de sécurité pour le véhicule.

15. Procédé pour faire fonctionner un système de batterie (100) ayant une pluralité de cellules de batterie (10) connectées électriquement en série entre un premier noeud (11) et un second noeud (12), un commutateur d'alimentation (13) interconnecté entre le premier noeud (11) ou le second noeud (12) et au moins une charge externe (14), et un système de commande (90) configuré pour commander le commutateur d'alimentation (13), le procédé comprenant les étapes consistant à :
commander, dans un mode de fonctionnement normal d'un premier MCU (21) du système de commande (90), le commutateur d'alimentation (13) par le premier MCU (21) via un premier signal de commande (41) adapté pour commander le commutateur d'alimentation (13), le premier signal de commande (41) étant transmis du premier MCU (21) à un multiplexeur (35) et, dans le mode de fonctionnement normal du premier MCU (21), délivré en sortie du multiplexeur (35) au commutateur d'alimentation (13) ;
détecter un mode de défaut du premier MCU (21) par un second MCU (31) du système de commande (90) ;
commander, dans le mode de défaut du premier MCU (21), le commutateur d'alimentation (13) par le second MCU (31) via un second signal de commande (42) adapté pour commander le commutateur d'alimentation (13), le second signal de commande (42) étant transmis du second MCU (31) au multiplexeur (35) et, dans le mode de défaut du premier MCU (21), délivré en sortie du multiplexeur (35) au commutateur d'alimentation (13),
dans lequel le second MCU (31) est une alternative au premier MCU (21) pour commander le commutateur d'alimentation (13).
